# FASCICULE DE BREVET EUROPEEN

(11) **EP 0 375 550 B1**
(45) Date de publication et mention de la délivrance du brevet: **12.10.1994**
(21) Numéro de dépôt: 89403582.3
(22) Date de dépôt: 20.12.1989
(51) Int. Cl.: C11B 1/04, B01J 2/00, A23L 1/211

(54) **Procédé de prétraitement de particules solides en vue de les utiliser pour extraire par un fluide au moins un constituant présent dans ces particules**
Vorbehandlungsverfahren für feste Partikel, aus denen anschliessend mit einem Fluid wenigstens ein Bestandteil extrahiert wird
Process for pretreating solid particles for their use to extract with a fluidum at least one component present in these particles

(30) Priorité: 21.12.1988 FR 8816914
(43) Date de publication de la demande: 27.06.1990
(73) Titulaire: UNIVERSITE DES SCIENCES ET TECHNIQUES DU LANGUEDOC, F-34095 Montpellier Cédex 5 (FR); COMMISSARIAT A L'ENERGIE ATOMIQUE, 75015 Paris Cédex 15 (FR)
(72) Inventeur: Baccou, Jean-Claude, F-34080 Montpellier (FR); Faugeras, Pierre, F-30130 Pont Saint Esprit (FR)
(74) Mandataire: Des Termes, Monique

(56) Documents cités:
- DE-C- 970 855
- FR-A- 2 230 388

## Description

La présente invention a pour objet un procédé de prétraitement de particules solides en vue de les utiliser dans un procédé d'extraction par un fluide, par exemple un liquide, un gaz ou un fluide supercritique. Elle s'applique en particulier aux procédés d'extraction solide-fluide à partir de végétaux.

Dans ce domaine, les procédés d'extraction solide-fluide peuvent être utilisés, soit en vue d'extraire des constituants valorisables de produits végétaux, par exemple extraire l'huile à partir des graines de soja, soit d'extraire les constituants gênants en vue de valoriser le végétal, par exemple enlever l'amertume des concentrats de farine de fèves.

Pour ces techniques d'extraction, la pratique habituelle consiste à broyer tout d'abord le produit végétal pour former une poudre. Cependant, l'utilisation d'une poudre pose certains problèmes pour réaliser dans de bonnes conditions l'extraction solide-fluide.

En effet si l'on broie le produit végétal de manière à obtenir une poudre fine ayant par exemple une granulométrie de 10 à 100 micromètres, on réalise l'extraction dans de bonnes conditions car les cellules végétales ne sont plus intactes, leur paroi qui est souvent une barrière au solvant, étant détruite ; de ce fait l'accès du solvant est facilité et le rendement d'extraction peut être satisfaisant. En revanche, les particules étant très fines, celles-ci sont entraînées par le solvant d'extraction, ce qui pose des problèmes au niveau de l'installation d'extraction.

Lorsqu'on broie le produit végétal pour obtenir une poudre ayant une granulométrie plus élevée, par exemple de 1000 à 2000 micromètres, on n'est pas gêné par ce problème d'entraînement des particules par le solvant. En revanche, le solvant pénètre difficilement à l'intérieur des particules qui sont composées de plusieurs cellules végétales intactes dont les parois n'ont pas été détruites.

Le document **DE-C-970 855** (Metallgesellschaft Ag) illustre un procédé d'extraction d'huiles, de graisses ou d'autres substances extractibles provenant par exemple de végétaux, dans lequel on transforme les fines substances de départ en granulés, par granulation ou malaxage après avoir ajouté de l'eau, en pressant le mélange humide à travers une plaque à trous.

Le document **FR-A-2 230 388** (Simon ROSEDOWNS Ltd) concerne un procédé d'extraction par solvant de composants de produits naturels d'origine animale ou végétale se présentant sous la forme d'une poudre, dans lequel on transforme tout d'abord la poudre en paillettes, après qu'elle ait été cuite et humidifiée, puis on transforme les paillettes en flocons entre deux rouleaux et enfin on sèche les flocons pour réduire leur teneur en humidité à une valeur de l'ordre de 5 à 10 % en poids.

La présente invention a pour objet un procédé d'extraction par un liquide, un gaz ou un fluide supercritique d'au moins un constituant présent dans une poudre fine, qui utilise un autre mode de traitement de la poudre en vue de réaliser l'extraction dans de bonnes conditions sans avoir de problèmes d'entraînement des particules de poudre par le solvant.

Selon l'invention, le procédé d'extraction par un liquide, un gaz ou un fluide supercritique d'au moins un constituant présent dans des particules solides ayant des dimensions de 10 à 500 micromètres, se caractérise en ce qu'il consiste à ajouter un liant aux particules solides, à les compacter pour former des granulés ayant une dimension de 1000 à 5000 micromètres, et à mettre en contact les granulés ainsi obtenus avec le liquide, le gaz ou le fluide supercritique pour extraire dans celui-ci le(s) constituant(s) voulu(s).

Dans ce procédé, on part ainsi de particules très fines, ce qui dans le cas de produits végétaux correspond à la destruction des parois cellulaires, et on amène ces particules sous la forme de granulés dont les dimensions sont suffisamment importantes pour éviter les problèmes d'entraînement de particules par le solvant. Néanmoins, dans les granulés obtenus, les particules végétales dont les parois cellulaires ont été détruites, restent bien accessibles au solvant, ce qui permet d'obtenir de bons taux d'extraction.

Ainsi, le compactage avec un liant permet d'obtenir des particules de taille relativement importante donc facilement utilisables dans les systèmes d'extraction solide-fluide, mais à l'intérieur desquelles le solvant pénètre facilement, donc une vitesse d'extraction relativement élevée.

De plus, on ne modifie pas par ce prétraitement la composition chimique du produit à extraire.

Le compactage des particules de poudre peut être réalisé dans des appareillages classiques par exemple dans des presses à compacter.

Dans le procédé de l'invention, on réalise le compactage des particules après leur avoir ajouté un liant. La présence d'un liant permet en particulier d'éviter que les granulés se désagrègent ensuite lorsqu'ils sont soumis à une extraction par solvant. Les liants utilisés peuvent être de différents types. Toutefois, dans le cas où les particules sont d'origine végétale et destinées à l'industrie agroalimentaire, on utilise de préférence un liant de qualité alimentaire, choisi par exemple parmi les alginates et les dérivés cellulosiques comme les carboxyméthylcelluloses.

La quantité de liant ajoutée est généralement faible, et représente par exemple de 0,1 à 5 % en poids des particules à transformer en granulés.

Le liant peut être ajouté avec de l'eau. Dans ce cas, la quantité d'eau ajoutée représente généralement au plus 20 % en poids des particules.

Généralement, le compactage est réalisé sous une pression de 30 à 100 bars (3 à 10 MPa).

Généralement, les particules soumises au prétraitement sont préparées par broyage d'un produit solide, ce qui peut conduire à des particules ayant des densités différentes.

En effet, lorsque le produit solide est d'origine végétale, constitué par exemple de graines telles que des fèves ou des graines de soja, le broyage conduit à des particules de densités différentes, formées d'une part, de la graine elle-même et, d'autre part, de l'enveloppe des graines qui a une densité différente de celle de la graine, par exemple des téguments et des cotylédons.

Lorsqu'on soumet de telles particules à une extraction par solvant dans une colonne, un problème supplémentaire se pose car les particules se répartissent en fonction de leur densité dans la colonne.

Grâce au procédé de l'invention, le fait de réaliser un compactage avec un liant permet d'obtenir des granulés d'une densité intermédiaire puisque ceux-ci contiennent simultanément les particules provenant de l'enveloppe et les particules provenant des graines ; on peut ainsi éviter ce phénomène de répartition en densité des particules dans la colonne.

Le procédé de l'invention est applicable non seulement aux produits d'origine végétale, mais également aux produits d'origine animale ou minérale.

Il est ainsi utilisable dans tous les procédés d'extraction solide-fluide quel que soit la nature du solide à extraire.

Pour ces extractions, on peut utiliser des appareillages classiques, par exemple des colonnes à flux pulsé lorsque les produits à extraire sont d'origine végétale. Les colonnes pulsées utilisées pour l'extraction solide-liquide en continu comprennent habituellement un décanteur supérieur, un fût muni d'un garnissage constitué par exemple de plateaux de type disques et couronnes, et un décanteur inférieur. Dans une telle colonne, les granulés sont introduits dans le décanteur supérieur et ils circulent dans la colonne à contre-courant du solvant introduit dans le décanteur inférieur. La pulsation assure une fluidisation totale des granulés et une circulation facile de ces derniers.

Lorsque l'extraction est réalisée au moyen d'un fluide supercritique, par exemple CO₂, ou d'un liquide sous pression, on peut utiliser par exemple les appareillages décrits dans le document WO87/01299.

D'autres caractéristiques et avantages de l'invention apparaîtront mieux à la lecture des exemples suivants donnés bien entendu à titre illustratif et non limitatif.

### Exemple 1

Cet exemple concerne le traitement de graines de lupin amer en vue d'extraire de celles-ci les composés responsables de l'amertume.

On broie tout d'abord les graines de lupin amer à l'aide d'un broyeur Buhler-Miag modèle MLI204 de manière à obtenir une poudre dont la granulométrie soit inférieure à 100 micromètres.

A cette poudre, on ajoute un liant constitué par une carboxyméthylcellulose de sodium de qualité alimentaire commercialisée sous la référence 7LXF en quantité représentant 0,5% en poids de la poudre obtenue précédemment. On ajoute également de l'eau de manière à obtenir une teneur finale en eau du mélange de 14%.

On compacte alors ce mélange avec un compacteur granulateur Alexanderwerk type WP 50N/75 en réglant la pression à 85 bars et en choisissant une grille dont l'ouverture de maille est de 2 mm.

Dans ces conditions, on obtient des granulés non friables ayant la forme de parallélépipède rectangle de dimension 1mmx2mmx2mm.

On soumet ensuite ces granulés à une extraction par solvant en utilisant successivement deux solvants constitués respectivement par l'hexane et l'alcool éthylique de titre 70%.

On constate que :
1°) le liant ne ralentit pas la vitesse d'extraction par les deux solvants, et
2°) les granulés ne se désagrégent pas lors de l'extraction.

De plus, l'utilisation d'un liant de qualité alimentaire permet d'utiliser les tourteaux ayant subi les deux extractions dans l'alimentation humaine ou animale.

### Exemple 2

Cet exemple concerne le traitement de graines de fenugrec.

On suit le même mode opératoire que dans l'exemple 1 et l'on obtient, après broyage des graines, deux fractions qui sont constituées respectivement par :
1°) le tégument et le mucilage ce qui conduit à des particules d'une densité de 1,48,et
2°) les cotylédons et le germe, ce qui conduit à des particules ayant une densité de 1,33.

On ajoute aux particules ainsi obtenues un liant et de l'eau en utilisant le même liant et les mêmes quantités de liant et d'eau que dans l'exemple 1, puis on compacte le mélange sous une pression de 85 bars en utilisant la même grille que précédemment.

On obtient ainsi des granulés qui peuvent être soumis à une extraction par solvant dans une colonne à flux pulsé sans que l'on obtienne une séparation des particules en fonction de leur densité.

### Exemple 3

Cet exemple concerne le traitement de farine de fèves en vue d'extraire de celle-ci les composés responsables de l'amertume.

La farine de fèves a été obtenue par broyage de fèves et elle présente une granulométrie de 15 micromètres à 30 micromètres.

A cause de la granulométrie très fine, il n'est pas possible de réaliser une extraction solide-liquide de cette farine dans des colonnes à flux pulsé.

Selon le procédé de l'invention, on ajoute à la farine de fèves 0,5 % en poids du liant 7 LXF et 14% en poids d'eau, puis on compacte la farine de fèves à l'aide d'une presse à compacteur de marque Alexanderwerk type WP50 en réglant la pression à 50 bars et en choisissant une grille dont l'ouverture de maille est telle que l'on obtienne des granulés dont la taille soit de 2 millimètres.

On met ensuite en contact les granulés de poudre de fèves ainsi obtenus avec de l'alcool éthylique de titre 70° en utilisant un rapport en poids granulés/solvant de 1/10. On agite le mélange pendant 10 minutes puis on sépare la poudre du solvant par filtration.

Dans ces conditions on a extrait la totalité des composés responsables de l'amertume des farines de fèves.

Par ailleurs, on observe que
- d'une part les granulés ne se délitent pas lors de l'extraction, et que
- d'autre part le solvant pénètre très facilement à l'intérieur des granulés.

## Revendications

1. Procédé d'extraction par un liquide, un gaz ou un fluide supercritique d'au moins un constituant présent dans des particules solides ayant des dimensions de 10 à 500 micromètres, caractérisé en ce qu'il consiste à ajouter un liant aux particules solides, à les compacter pour former des granulés ayant une dimension de 1000 à 5000 micromètres, et à mettre en contact les granulés ainsi obtenus avec le liquide, le gaz ou le fluide supercritique pour extraire dans celui-ci le(s) constituant(s) voulu(s).

2. Procédé selon la revendication 1, caractérisé en ce que l'on utilise un liant de qualité alimentaire.

3. Procédé selon l'une quelconque des revendications 1 et 2, caractérisé en ce que l'on réalise le compactage sous une pression de 3 à 10 MPa.

4. Procédé selon l'une quelconque des revendications 1 à 3, caractérisé en ce que les particules ont été préparées par broyage d'un produit solide.

5. Procédé selon la revendication 4, caractérisé en ce que les particules obtenues par broyage ont des densités différentes.

6. Procédé selon l'une quelconque des revendications 5 et 5, caractérisé en ce que le produit solide est d'origine végétale.

7. Procédé selon la revendication 6, caractérisé en ce que le produit solide est constitué par des graines et en ce que les particules comprennent des particules de tégument et des particules de cotylédons.

8. Procédé selon la revendication 7, caractérisé en ce que les graines sont des fèves, des graines de lupin amer ou des graines de fenugrec.

## Claims

1. Process for the extraction by a liquid, a gas or a super-critical fluid of at least one constituent present in solid particles having sizes between 10 and 500 micrometers, characterized in that it consists of adding a binder to the solid particles, compacting them to form granules having a size between 1000 and 5000 micrometers and contacting the thus obtained granules with the liquid, the gas or the super-critical fluid in order to extract therein the desired constituents.

2. Process according to claim 1, characterized in that a feed quality binder is used.

3. Process according to either of the claims 1 and 2, characterized in that compacting is performed under a pressure of 3 to 10 MPa.

4. Process according to any one of the claims 1 to 3, characterized in that the particles are prepared by crushing a solid product.

5. Process according to claim 4, characterized in that the particles obtained by crushing have different densities.

6. Process according to claim 5, characterized in that the solid product has a vegetable origin.

7. Process according to claim 6, characterized in that the solid product is constituted by seed and that the particles incorporate tegumen and cotyledon particles.

8. Process according to claim 7, characterized in that the seed are beans, bitter lupin seed or fenugreek seed.

## Patentansprüche

1. Extraktionsverfahren mit einer Flüssigkeit, einem Gas oder einem superkritischen Fluid von wenigstens einem Bestandteil, enthalten in festen Partikeln, die Abmessungen von 10 bis 500 Mikrometern haben,
**dadurch gekennzeichnet**, daß es darin besteht, den festen Partikeln ein Bindemittel beizumischen, sie zu verdichten, um Granulate zu bilden, die eine Abmessung von 1000 bis 5000 Mikrometern haben, und die so erhaltenen Granulate in Kontakt mit der Flüssigkeit, dem Gas oder dem superkritischen Fluid zu bringen, um in diese den (die) gewünschten Bestandteil(e) zu extrahieren.

2. Verfahren nach Anspruch 1, dadurch gekennzeichnet, daß man ein Bindemittel von Nahrungmittelqualität verwendet.

3. Verfahren nach einem der Ansprüche 1 oder 2, dadurch gekennzeichnet, daß die Verdichtung unter einem Druck von 3 bis 10 MPa erfolgt.

4. Verfahren nach einem der Ansprüche 1 bis 3, dadurch gekennzeichnet, daß die Partikel vorbereitet wurden durch Zerkleinerung eines festen Produkts.

5. Verfahren nach Anspruch 4, dadurch gekennzeichnet, daß die durch die Zerkleinerung erhaltenen Partikel unterschiedliche Dichten aufweisen.

6. Verfahren nach einem der Ansprüche 4 und 5, dadurch gekennzeichnet, daß das feste Produkt pflanzlichen Ursprungs ist.

7. Verfahren nach Anspruch 6, dadurch gekennzeichnet, daß das feste Produkt durch Samen gebildet wird, und daß die Partikel Integumentpartikel und Kotyledonepartikel umfassen.

8. Verfahren nach Anspruch 7, dadurch gekennzeichnet, daß die Samen Sau- bzw. Puffbohnen, Samen der bitteren Lupine oder Bockshornkleesamen sind.
